(19) **Europäisches Patentamt**

**European Patent Office**

**Office européen des brevets**

(11) **EP 0 703 274 B1**

(12) **EUROPÄISCHE PATENTSCHRIFT**

(45) Veröffentlichungstag und Bekanntmachung des Hinweises auf die Patenterteilung:
**01.04.1998 Patentblatt 1998/14**

(51) Int Cl.⁶: **C08L 23/22**, C08L 23/02

(21) Anmeldenummer: **95114198.5**

(22) Anmeldetag: **11.09.1995**

(54) **Verfahren zur Herstellung von Mischungen aus hochmolekularem Polyisobutylen und thermoplastischen Polymeren**

Method of preparation of high molecular weight polybutylene and thermoplastic polymer blends

Procédé de préparation de mélanges à base de polybutylène à poids moléculair élevé et polymères thermoplastiques

(84) Benannte Vertragsstaaten:
**AT BE DE ES FR GB IT NL**

(30) Priorität: **19.09.1994 DE 4433273**

(43) Veröffentlichungstag der Anmeldung:
**27.03.1996 Patentblatt 1996/13**

(73) Patentinhaber: **BASF AKTIENGESELLSCHAFT**
**67056 Ludwigshafen (DE)**

(72) Erfinder:
- **Hofmann, Jürgen**
  **D-67069 Ludwigshafen (DE)**
- **Kessler, Thomas**
  **D-67105 Schifferstadt (DE)**
- **Marczinke, Bernd Lothar, Dr.**
  **D-67346 Speyer (DE)**
- **Brosius, Sibylle, Dr.**
  **D-67071 Ludwigshafen (DE)**
- **Fauth, Karl-Heinz**
  **D-67319 Wattenheim (DE)**

(56) Entgegenhaltungen:
EP-A- 0 035 677      CH-A- 232 826
DE-A- 4 319 181      US-A- 3 230 288

**Beschreibung**

Die vorliegende Erfindung betrifft ein Verfahren zur kontinuierlichen Herstellung von Mischungen aus hochmolekularem Polyisobutylen und thermoplastischen Polymeren in einem Extruder.

Es ist bekannt, Polyisobutylen durch kationische Polymerisation mit Hilfe von Borhalogeniden, insbesondere durch Bortrifluorid herzustellen (EP-A 206 756, US-A 4 316 973, GB-A 525 542, GB-A 828 367). Dabei kann die Polymerisation des Isobutylens so gesteuert werden, daß Polyisobutylene mit Molmassen ($\overline{M}$n) - Zahlenmittel - von weit mehr als 1 000 000 erhalten werden können. Derartige hochmolekulare Polyisobutylene werden u.a. in Abmischungen mit anderen Polymeren zur Herstellung von Selbstklebemassen und von Dichtungsmaterialien eingesetzt.

In Abmischungen mit Paraffinöl und anorganischen Füllstoffen erhält man aus Polyisobutylenen auch dauerplastische Dichtstoffe, die üblicherweise in extrudierter Form als Band oder Rundprofilschnur in den Handel kommen.

Weiterhin ist es möglich, aufgrund des guten Füllstoffaufnahmevermögens des hochmolekularen Polyisobutylens aus Abmischungen des Polyisobutylens mit entsprechenden Substanzen und Füllstoffen Bahnen herzustellen, die zur Bautenabdichtung gegen Grund- und Sickerwasser, sowie im Korrosions- und Strahlenschutz eingesetzt werden. Aber auch elektrisch leitfähige und magnetische Bahnen auf Basis von Polyisobutylen finden ihre Anwendung (Ullmann's Encyclopedia of Industrial Chemistry, Vol A 21, 4. Polyisobutylene-, Seite 555-561, 1992).

Hochmolekulares Polyisobutylen wird auch häufig als Bestandteil von "Blends", d.h. Mischungen aus verschiedenen Polymeren eingesetzt, da dieses die Eigenschaften solcher Mischungen oft deutlich verändert. Derartige Mischungen werden u.a. als Bestandteil von Kaugummis verwendet (US-A 4,352,823).

Mischungen aus hochmolekularem Polyisobutylen und thermoplastischen Polymeren, wie beispielsweise aus Polyolefinen, werden derzeit in diskontinuierlich arbeitenden Trogknetern oder in Walzenstühlen hergestellt (Ullmann's Encyclopedia of Industrial Chemistry, Vol. A 21, 4. Polyisobutylene, Seite 555-561, 1992). Um den Anwendungsbereich derartiger Mischungen zu verbreitern und die Produktion wirtschaftlicher zu gestalten ist es aber nötig, die Herstellung kontinuierlich in Extrudern vorzunehmen.

Aus der US-A 3,230,288 ist bekannt, Polyolefine wie beispielsweise Polyethylen in einem Extruder einem Molmassenabbau zu unterwerfen. Auf diese Weise lassen sich die Verarbeitungseigenschaften derartiger Polymerer verbessern.

In der DE-A 4 319 181 wird ein Verfahren zur Herstellung von Mischungen aus Polyisobutylen und einem weiteren Polymeren in einem Extruder beschrieben, wobei man das Polyisobutylen zunächst aufschmilzt und dann einem Entgasungsextruder zuführt. Das dabei entstehende Granulat kann leicht verarbeitet werden.

Nach den bisher bekannten Verfahren wird die Herstellung derartiger Mischungen in einem Extruder in der Weise ausgeführt, daß man beide Mischungskomponenten gemeinsam aufschmilzt und anschließend homogenisiert. Die daraus resultierenden Mischungen sind aber stark inhomogen und nicht stippenfrei. Verlängert man den Homogenisierungsschritt, um auf diese Weise homogenere Mischungen zu erreichen, wird dabei das hochmolekulare Polyisobutylen durch Scherung so stark abgebaut, daß die erhaltenen Mischungen so stark kleben, daß sie nicht mehr richtig dosiert werden können. Um dies zu vermeiden, ist man derzeit auf den Einsatz von Schaufelknetern angewiesen, was aber verfahrenstechnisch aufwendig ist.

Der vorliegenden Erfindung lag daher die Aufgabe zugrunde, den geschilderten Nachteilen abzuhelfen und ein verbessertes Verfahren zur Herstellung von homogenen Mischungen aus hochmolekularem Polyisobutylen und thermoplastischen Polymeren zu entwickeln, welches ohne großen verfahrenstechnischen Aufwand zu stippen- und klebefreien Mischungen führt.

Demgemäß wurde ein Verfahren zur kontinuierlichen Herstellung von Mischungen aus hochmolekularem Polyisobutylen und thermoplastischen Polymeren in einem Extruder entwickelt, welches dadurch gekennzeichnet ist, daß man zunächst hochmolekulares Polyisobutylen mit einer Molmasse (Zahlenmittel) $\overline{M}$n von mindestens 80000 in den Extruder als dosierfähiges, nicht klebendes Granulat oder Mahlgut eindosiert und in wenigstens einer Knetstufe homogenisiert, aufheizt und einem kontrollierten Molmassenabbau unterwirft und anschließend das thermoplastische Polymere mittels einer Seitenbeschickung in die Polyisobutylenschmelze einbringt und nachfolgend mit dieser gemeinsam homogenisiert.

Das erfindungsgemäße Verfahren wird dabei in einem Extruder, vorzugsweise in einem Doppelschnekkenextruder durchgeführt. Derartige Doppelschneckenextruder werden u.a. von der Firma Werner & Pfleiderer unter den Handelsnamen "ZSK" vertrieben.

Die aus dem erfindungsgemäßen Verfahren resultierende Mischung enthält u.a. ein hochmolekulares Polyisobutylen mit einer Molmasse (Zahlenmittel) $\overline{M}$n von mindestens 80.000, insbesondere mit einer Molmasse $\overline{M}$n von 100.000 bis 1.000.000.

Derartige hochmolekulare Polyisobutylene sind u. a. erhältlich durch kationische Polymerisation von Isobutylen nach dem sogenannten Bandverfahren, wobei man Isobutylen in reinem, getrocknetem, flüssigem Ethylen auf einem schwach geneigten, endlosen Stahlband mit Hilfe von Bortrifluorid kationisch polymerisiert (DE-A 3 527 551). Weiterhin werden solche hochmolekularen Polyisobutylene auch unter dem Handelsnamen Oppanol® von der BASF Aktiengesellschaft vertrieben.

Als thermoplastische Polymere werden nach dem erfindungsgemäßen Verfahren u.a. Polystyrol, Polymethylmethacrylat, Polymethacrylat, Polyester, Polycarbonat oder dienhaltige Polymere verwendet. Bevorzugt enthält eine derartige Mischung Polyolefine als thermoplastische Polymere.

Als Polyolefine können u.a. neben Polyethylen auch Polypropylen oder Polybut-1-en sowie die entsprechenden Copolymerisate des Ethylens, Propylens sowie But-1-ens verwendet werden, wobei letztere auch noch untergeordnete Anteile von höheren $C_5$-$C_8$-Alk-1-enen enthalten können. Bevorzugt wird in der homogenen Mischung ein Polyethylen mit einer Dichte bei Raumtemperatur von 0,89 bis 0,93 g/cm$^3$, insbesondere von 0,90 bis 0,928 g/cm$^3$, eingesetzt.

Derartige Polyolefine können mit den in der Technik üblichen Polymerisationsverfahren hergestellt werden, beispielsweise durch Hochdruckpolymerisation mit Hilfe von radikalisch zerfallenden Initiatoren, durch Polymerisation mit Ziegler- bzw. mit Ziegler-Natta-Katalysatoren sowie mit Phillips-Katalysatoren, oder aber durch Polymerisation mit metallocenhaltigen Katalysatoren. Die Polymerisation kann dabei in der Gasphase, in Lösung oder in einer Suspension sowohl kontinuierlich als auch diskontinuierlich durchgeführt werden. Derartige Herstellungsverfahren sind dem in der Kunststofftechnik arbeitenden Fachmann bekannt.

Die nach dem erfindungsgemäßen Verfahren erhaltenen homogenen Mischungen bestehen üblicherweise aus 10 bis 90 Gew.-%, insbesondere aus 30 bis 80 Gew.-% des hochmolekularen Polyisobutylens und 90 bis 10 Gew.-%, insbesondere 70 bis 20 Gew.-% des thermoplastischen Polymeren.

Die Herstellung der homogenen Mischung erfolgt insbesondere dadurch, daß man in einem mit einer Aufschmelzzone und mehreren Mischzonen ausgerüsteten Extruder zunächst das hochmolekulare Polyisobutylen in wenigstens einer Knetstufe auf Temperaturen von 160 bis 300°C, insbesondere von 180 bis 240°C, aufheizt, homogenisiert und einem kontrollierten Molmassenabbau unterwirft. Das hochmolekulare Polyisobutylen wird dabei als dosierfähiges, nicht klebriges Granulat oder Mahlgut üblicherweise bei Temperaturen von 0 bis 100°C, insbesondere von 10 bis 50°C, in den Extruder eingebracht und dort anschließend aufgeheizt.

Danach wird mittels einer zweiten Dosierung das thermoplastische Polymere über einen Seiteneinzug in die Polyisobutylenschmelze eingebracht und mit dieser bei Temperaturen von vorzugsweise 180 bis 270°C, insbesondere von 190 bis 240°C gemeinsam homogenisiert.

Das erfindungsgemäße Verfahren wird im Extruder vorzugsweise bei Verweilzeiten des zu homogenisierenden Gemisches von 0,5 bis 5 Minuten, insbesondere von 2 bis 4 Minuten durchgeführt. Der Extruder wird dabei mit einer Geschwindigkeit von vorzugsweise 50 bis 300 Umdrehungen/Minute, insbesondere von 100 bis 250 Umdrehungen/Minute betrieben.

Durch die getrennte Zudosierung von hochmolekularem Polyisobutylen einerseits und thermoplastischen Polymeren andererseits erhält man auf einfache Weise sehr homogene, stippenfreie und nicht klebende Mischungen. Diese Mischungen weisen Schmelzflußindices von 0,1 bis 200 g/10 min., insbesondere von 1,0 bis 100 g/10 min., bei 190°C und unter einem Gewicht von 21,6 kg, auf. Die Bestimmung der Schmelzflußindices erfolgt dabei nach DIN 53 735.

Die erhaltenen Mischungen aus hochmolekularem Polyisobutylen und thermoplastischen Polymeren eignen sich u.a. zur Herstellung von Folien, Fasern oder Formkörpern.

Beispiele

Das erfindungsgemäße Beispiel 1 wurde ebenso wie das Vergleichsbeispiel A in einem Doppelschnekkenextruder des Typs "ZSK 57" der Firma Werner & Pfleiderer durchgeführt, der mit einer Aufschmelzzone und drei Mischzonen ausgerüstet war.

Beispiel 1

In dem beschriebenen Doppelschneckenextruder wurden zunächst 75 Gew.-Teile eines hochmolekularen Polyisobutylens mit einer Molmasse (Zahlenmittel) $\overline{M}$n von 425.000 (Oppanol® 150, der Firma BASF Aktiengesellschaft) in den Extrudereinzug dosiert, dort bei 190°C aufgeschmolzen, gemischt und extrudiert. Der Zweischneckenextruder wies ein Längen/Durchmesser-Verhältnis von 21 auf. Dabei wurde das Einzugsgehäuse mit Wasser gekühlt und die restlichen 6 Gehäuseschüsse wurden elektrisch auf 200°C temperiert. Die Extruderdrehzahl betrug 188 Umdrehungen/Minute, die Drehmomentauslastung lag bei einem Durchsatz von 55 kg/Stunde bei 90 %. Getrennt vom hochmolekularen Polyisobutylen wurden nach dem Aufschmelzen des hochmolekularen Polyisobutylens 25 Gew.-Teile eines Polyethylens einer Dichte von 0,927 g/cm$^3$ bei Raumtemperatur mit einer Seitendosierung (ZSB 40) in den vierten Gehäuseschuß des Extruders gedrückt. Die spezifische Energieaufnahme lag bei 0,398 kWh/kg. Man erhielt 73 kg einer homogenen Mischung mit einem Schmelzflußindex von 29,8 g/min, bei 190°C und 21,6 kg, nach DIN 53 735.

Die daraus erhaltene Mischung war praktisch stippenfrei und wies eine Foliennote (bestimmt durch visuelle Auswertung) von 2 auf, so daß es zur Folienherstellung geeignet war. Die Klebeneigung der erhaltenen Mischung war stark reduziert.

Vergleichsbeispiel A

Entsprechend dem Extruderaufbau des erfindungsgemäßen Beispiel 1 wurden das hochmolekulare Polyisobutylen und das Polyethylen miteinander vermengt, wobei aber 75 Gew.-Teile des hochmolekularen Polyisobutylens und 25 Gew.-Teile des Polyethylens über zwei Differentialdosierungen der Firma K-tron Soder gemeinsam in den Extrudereinzug dosiert und gemeinsam aufgeschmolzen, gemischt und extrudiert wurden.

Unter ansonsten gleichen Bedingungen wie im Beispiel 1 lag hier der Durchsatz bei 44 kg/Stunde, die spezifische Energieaufnahme betrug 0,445 kWh/kg. Man erhielt pro Stunde 73 kg einer nicht ausreichend homogenen Mischung mit einem Schmelzflußindex von 28,3 g/10 min., bei 190°C und 21,6 kg, nach DIN 53 735.

Die daraus erhaltene Mischung war stark verstippt und aufgrund der Foliennote 3 (bestimmt durch visuelle Auswertung) zur Folienherstellung nicht geeignet. Darüber hinaus wies die erhaltene Mischung eine starke Neigung zum Kleben auf, aufgrund erhöhter Anteile an niedermolekularem Polyisobutylen.

Aus einem Vergleich zwischen dem erfindungsgemäßen Beispiel 1 und dem Vergleichsbeispiel A geht u. a. hervor, daß mit Hilfe des erfindungsgemäßen Verfahrens, insbesondere durch die getrennte, zeitlich abgestufte Eindosierung von hochmolekularem Polyisobutylen einerseits und des thermoplastischen Polymeren andererseits eine sehr homogene, stippenfreie und nicht klebrige Mischung erhalten wird.

## Patentansprüche

1. Verfahren zur kontinuierlichen Herstellung von Mischungen aus hochmolekularem Polyisobutylen und thermoplastischen Polymeren in einem Extruder, dadurch gekennzeichnet, daß man zunächst hochmolekulares Polyisobutylen mit einer Molmasse (Zahlenmittel) $\overline{M}n$ von mindestens 80000 in den Extruder als dosierfähiges, nicht klebendes Granulat oder Mahlgut dosiert und in wenigstens einer Knetstufe homogenisiert, aufheizt und einem kontrollierten Molmassenabbau unterwirft und anschließend das thermoplastische Polymere mittels einer Seitenbeschickung in die Polyisobutylenschmelze einbringt und nachfolgend mit dieser gemeinsam homogenisiert.

2. Verfahren nach Anspruch 1, dadurch gekennzeichnet, daß man in einem Doppelschneckenextruder arbeitet.

3. Verfahren nach einem der Ansprüche 1 oder 2, dadurch gekennzeichnet, daß man ein hochmolekulares Polyisobutylen mit einer Molmasse (Zahlenmittel) von 80.000 bis 1.000.000 verwendet.

4. Verfahren nach einem der Ansprüche 1 bis 3, dadurch gekennzeichnet, daß man als thermoplastische Polymere Polyolefine einsetzt.

5. Verfahren nach einem der Ansprüche 1 bis 4, dadurch gekennzeichnet, daß man als thermoplastische Polymere Polyethylen verwendet.

6. Verfahren nach einem der Ansprüche 1 bis 5, dadurch gekennzeichnet, daß man das hochmolekulare Polyisobutylen in wenigstens einer Knetstufe auf Temperaturen von 160 bis 300°C aufheizt, homogenisiert und einem kontrollierten Molmassenabbau unterwirft.

7. Verfahren nach einem der Ansprüche 1 bis 6, dadurch gekennzeichnet, daß man das thermoplastische Polymere und die Polyisobutylenschmelze bei Temperaturen von 180 bis 270°C gemeinsam homogenisiert.

8. Verfahren nach einem der Ansprüche 1 bis 7, dadurch gekennzeichnet, daß man den Extruder bei Geschwindigkeiten von 50 bis 300 Umdrehungen/ Minute betreibt.

## Claims

1. A process for the continuous preparation of a mixture of high molecular weight polyisobutylene and a thermoplastic polymer in an extruder, wherein high molecular weight polyisobutylene having a number average molecular weight $\overline{M}n$ of at least 80,000 is first metered into the extruder as meterable, nontacky granules or milled material and homogenized in at least one kneading stage, heated and subjected to controlled molecular weight degradation and the thermoplastic polymer is then introduced into the polyisobutylene melt by means of a side feed and subsequently homogenized together with said melt.

2. A process as claimed in claim 1, wherein a twin-screw extruder is used.

3. A process as claimed in claim 1 or 2, wherein a high molecular weight polyisobutylene having a number average molecular weight of from 80,000 to 1,000,000 is used.

4. A process as claimed in any of claims 1 to 3, wherein the thermoplastic polymer used is a polyolefin.

5. A process as claimed in any of claims 1 to 4, wherein the thermoplastic polymer used is polyethylene.

6. A process as claimed in any of claims 1 to 5, wherein the high molecular weight polyisobutylene is heated in at least one kneading stage to 160-300°C, homogenized and subjected to controlled molecular weight degradation.

7. A process as claimed in any of claims 1 to 6, wherein the thermoplastic polymer and the polyisobutylene melt are homogenized together at from 180 to 270°C.

8. A process as claimed in any of claims 1 to 7, wherein the extruder is operated at speeds of from 50 to 300 revolutions/minute.

**Revendications**

1. Procédé de préparation continue de mélanges de polyisobutylène de poids moléculaire élevé et de polymères thermoplastiques dans une extrudeuse, caractérisé en ce que, en premier lieu, on introduit une quantité dosée de polyisobutylène de poids moléculaire élevé, d'une masse molaire (moyenne en nombre) $\overline{M}n$ d'au moins 80 000 dans l'extrudeuse, sous forme de produit moulu ou de granulé, non collant, dosable et, on l'homogénéise, chauffe et le soumet à une dégradation réglée de la masse molaire en au moins une étape de malaxage et on introduit ensuite le polymère thermoplastique par une alimentation latérale dans la masse de polyisobutylène fondue et on l'homogénéise ensuite en commun avec celle-ci.

2. Procédé suivant la revendication 1, caractérisé en ce que l'on travaille dans une extrudeuse à double vis.

3. Procédé suivant l'une quelconque des revendications 1 et 2, caractérisé en ce que l'on utilise un polyisobutylène de poids moléculaire élevé, possédant une masse molaire (moyenne en nombre) de 80 000 à 1 000 000.

4. Procédé suivant l'une quelconque des revendications 1 à 3, caractérisé en ce que l'on utilise des polyoléfines à titre de polymères thermoplastiques.

5. Procédé suivant l'une quelconque des revendications 1 à 4, caractérisé en ce que l'on utilise le polyéthylène à titre de polymère thermoplastique.

6. Procédé suivant l'une quelconque des revendications 1 à 5, caractérisé en ce que l'on chauffe, homogénéise et soumet à une dégradation réglée de la masse molaire, du polyisobutylène de poids moléculaire élevé en au moins une étape de malaxage, à des températures de 160 à 300°C.

7. Procédé suivant l'une quelconque des revendications 1 à 6, caractérisé en ce que l'on homogénéise en commun le polymère thermoplastique et la masse fondue de polyisobutylène à des températures de 180 à 270°C.

8. Procédé suivant l'une quelconque des revendications 1 à 7, caractérisé en ce que l'on exploite l'extrudeuse à des vitesses de 50 à 300 tours/minute.